# EUROPÄISCHE PATENTANMELDUNG

(11) **EP 2 364 843 A1**
(43) Veröffentlichungstag der Anmeldung: **14.09.2011**
(21) Anmeldenummer: 10002110.4
(22) Anmeldetag: 02.03.2010
(51) Int. Cl.: B32B 27/08, B32B 27/32, B32B 27/36, B65D 75/00, B65D 71/08

(54) **Schrumpffolie mit verbesserter Steifigkeit, Zähigkeit und Transparenz**

(71) Anmelder: RKW SE, 67227 Frankenthal (DE)
(72) Erfinder: Greifenstein, Achim, 67122 Altrip (DE); Egner, Florian, 86450 Altenmuenster (DE)
(74) Vertreter: Wagner, Jutta

(57) **Zusammenfassung**

Die Erfindung betrifft eine Schrumpffolie aus mindestens drei Schichten für die Verpackung von Mehrfachgebinden, die eine dünne Kernschicht, welche nicht mehr als 30% der Gesamtdicke ausmacht, umfasst, wobei die Kernschicht zu wenigstens 50 % aus einem ab spätestens 120°C schrumpfbaren Material besteht, welches einen E-Modul von mindestens 800 MPa aufweist und von Deckschichten aus einem Material umgeben ist, welches eine Bruchdehnung in Querrichtung von mindestens 500 % aufweist.

## Beschreibung

Die vorliegende Erfindung betrifft eine Schrumpffolie, sowie deren Verwendung als Verpackung.

Schrumpffolien werden heute in einer Vielzahl von Anwendungen eingesetzt. Eine der Hauptanwendungen sind Verpackungsfolien für Mehrfachgebinde im Bereich Getränke, sog. Multipacks. Beim Verpackungsvorgang wird die Folie locker um die zusammen zu verpackende Anzahl Getränkebehälter gelegt und durch Anwendung von Wärme geschrumpft, so dass sie anschließend die Behälter eng umschließt.

Folien müssen ein ganze Reihe Anforderungen erfüllen, um für diese Art Verpackung geeignet zu sein. Hauptvoraussetzung für einen effizienten Verpackungsvorgang ist ein ausreichend schnelles Schrumpfen bei handhabbaren Temperaturen. Im Hinblick auf die maschinelle Verpackung muss die Folie eine ausreichende Steifigkeit haben.

Außerdem muss die Folie stabil genug sein, das Mehrfachgebinde während des Transportes zusammenzuhalten. Die Verpackung darf nicht leicht reißen oder weiterreißen, selbst wenn sie puntkuell beschädigt wird. Sie darf nicht zu dehnbar sein, die Gebinde müssen eine kompakte, feste Einheit bilden. Meistens werden Tragegriffe angeschweißt, welche nicht aus- oder abreißen dürfen.

Da die Mehrfachgebinde die Verkaufsverpackung darstellen, müssen sie auch optisch ansprechend sein. Typischerweise werden transparente Folien gewünscht, so dass der Verbraucher die verpackten Gebinde durch die Verpackung hindurch gut sehen kann.

Es ist eine große Vielzahl an Folien, vor allem mehrlagige Folien, für diesen Zweck vorgeschlagen worden. Beispielhaft sei auf US 7,422,786 B2 und den darin erläuterten Stand der Technik verwiesen. Das dort als Kernschichtkomponente vorgeschlagene HDPE weist jedoch einen hohen Schmelzpunkt und damit auch schlechte Schrumpfwerte auf.

Üblicherweise werden Folien mit einem hohen Anteil an Polyethylen niederer Dichte (LDPE) eingesetzt, um das korrekte Verhältnis von Längs- (60 bis 80% bei 130°C, 20s im Ölbad) zu Querschrumpf (20 bis 30% bei 130°C, 20s) zu erzielen. Lineares Polyethylen niederer Dichte (LLDPE) weist zwar gute optische und mechanische Eigenschaften auf. Ein reines, kostengünstiges LLDPE hätte aber einen zu geringen Querschrumpf. Um die Folien dünner zu machen, kann Polyethylen hoher Dichte (HDPE) oder Polyethylen mittlerer Dichte (MDPE) einer relativ dicken (mehr als 33% der Gesamtdicke) Kernschicht beigemischt werden. Dies verschlechtert allerdings die optischen (Transparenz) und mechanischen Eigenschaften (Weiterreißfestigkeit). Ausserdem wird durch diese Maßnahme der Querschrumpf verringert.

Aus Gründen des Ressourcenschutzes strebt man jedoch immer dünnere Folien an, die idealerweise auch bei geringerer Temperatur (Energieeinsatz) verarbeitet werden können. Zur Reduzierung der Foliendicke ist einerseits eine hohe Steifigkeit auch bei höheren Temperaturen im Sommer notwendig, um ein unerwünschtes Auslängen und "kriechen" der Folie an den Griffen zu vermeiden. Andererseits muss die Folie eine ausreichende Zähigkeit und Weiterreißfestigkeit aufweisen, um bei stoßartiger Belastung nicht zu leicht durchstoßen und beschädigt zu werden.

Verwendet man in der Mittelschicht (oder in einer anderen Schicht) ein sehr steifes Material, wie z.B. HDPE oder sogar Polypropylen als Hauptkomponente, so könnte man durchaus die gewünschte Kombination an mechanischen Eigenschaften mit dünnen Folien erreichen, jedoch nur bei deutlich höheren, in der industriellen Anwendung nicht akzeptablen Schrumpftemperaturen.

Es besteht daher weiterhin Bedarf an Folien, die eine ausgewogene Kombination von optischen und mechanischen Eigenschaften bei möglichst geringer Foliendicke aufweisen und bei den üblichen Temperaturen ein ausreichendes Schrumpfvermögen besitzen.

Überraschend wurde nun gefunden, dass mehrlagige Folien mit einer in der Industrie untypisch dünnen Kernschicht aus einem transparenten und gut schrumpfbarem Material sowie Deckschichten aus einem hochdehnbaren und zähen Material die oben genannten Anforderungen erfüllen.

Die Erfindung löst daher die oben genannten Anforderungen durch eine mindestens dreilagige Folie, mit einer Kernschicht, deren Dicke maximal 30 % der Foliendicke beträgt, aus einem transparenten und schrumpfbaren Material mit einem E-Modul größer als 800 MPa als Hauptkomponente und mit zähen, dehnbaren Deckschichten aus einem Material, welches eine Bruchdehnung in Querrichtung größer als 500% besitzt, wobei die Folie einen Schrumpf in Längsrichtung von mindestens 50 % und in Querrichtung von mindestens 10 % aufweist.

Das Resultat ist eine steife, belastbare, aber dennoch zähe, hochtransparente Folie mit guten Querschrumpfeigenschaften. Ein hoher Anteil an LDPE ist nicht zwingend erforderlich, da das schrumpfende Kernschichtmaterial ebenfalls bei üblichen Prozeßbedingungen im Blasfolienprozeß einen hohen Querschrumpf aufweist. Aus Gründen einen erhöhten Festigkeit und Zähigkeit lassen sich erfindungsgemäß somit erstmals Folien mit mLLDPE oder LLDPE in der Deckschicht herstellen.

Es ist wesentlich, dass die Kernschicht eine im Vergleich zur Gesamtfolie geringe Dicke aufweist. Maximal 30 % sind brauchbar, bevorzugt sind maximal 25 %, insbesondere maximal 20 %.

Die Kernschicht muss ein steifes, transparentes und schrumpfbares Material als Hauptkomponente enthalten. Hautpkomponente heißt, dass zumindest 50 Gew.-% der Schicht, vorzugsweise zumindest 70 Gew.-%, besonders bevorzugt zumindest 90 Gew.-% von dieser Komponente gebildet werden. Daneben können weitere Polymere und/oder übliche Additive vorhanden sein. Unter schrumpfbar ist im Rahmen der vorliegenden Erfindung zu verstehen, dass eine Folie aus dem Material bei 130°C, 20s im Ölbad in Längs- bzw. MD-Richtung 50% oder mehr, vorzugsweise 60 bis 80 % Schrumpf und in Quer- bzw. CD-Richtung 10 % oder mehr, vorzugsweise 20% oder mehr, besonders bevorzugt mindestens 30 % Schrumpf zeigt.

Geeignete Materialien für die Hautpkomponente der Kernschicht sind z.B. Styrolblockcopolymere, Polyester, Ethylen-Propylen-Copolymere oder cyclische Polyolefine (COP). Besonders bevorzugt sind Stryol-Butadien-Copolymere (SBS), Ethylen-Propylen-Copolymere, Polyethylenterepthalat (PET), Cycloolefin-Copolymere (COC) sowie Biopolymere.

Brauchbare SBS sind allgemein bekannt und kommerziell erhältlich, z.B. von ChevronPhilipps Int. N.V., Belgien oder BASF SE, Deutschland. Bevorzugte SBS haben einen Schmelzpunkt von maximal 100 °C, bevorzugt maximal 80°C, gemessen als Vicat-Erweichungstemperatur VST/B/50 nach ISO 306.

Brauchbare PET sind ebenfalls allgemein bekannt und kommerziell erhältlich z.B. als Materialien zur Herstellung von quergereckten Schrumpf-Sleeves.

Brauchbare COC sind Copolymere von cyclischen Olefinen wie Cyclopentadien und bevorzugt Norbornen mit α-Olefinen wie Ethylen, Propylen, Buten, Hexen, Octen, bevorzugt Ethylen. Auch diese sind kommerziell erhältlich.

Als Biopolymere kommen vor allem Polylactide (PLA), die auch Polymilchsäuren genannt werden, und Polyhydroxyalkanoate (PHA) oder Polyhydroxyfettsäuren (PHF) in Betracht. PHA und PHF sind natürlich vorkommende wasserunlösliche und lineare Polyester. Diese Biopolymere sind biologisch abbaubar. PLA wird nur unter bestimmten Bedingungen abgebaut, z.B. in industriellen Kompostieranlagen. Die Biopolymere sind typischerweise mit einem Impactmodifier ausgerüstet oder liegen im Gemisch verschiedener Biopolymere vor, oder beides. Die Biopolymere sind ebenfalls kommerziell erhältlich. PLA ist im Rahmen der Erfindung bevorzugt.

Das E-Modul des Hauptmaterials der Kernschicht, gemessen an einer 50 µm dicken Folien aus diesem beträgt 800 MPa oder mehr, vorzugsweise 1000 MPa oder mehr. Die Bestimmung erfolgt nach DIN EN ISO 527.

Die Deckschichten weisen erfindungsgemäß eine höhere Zähigkeit auf als die Kernschicht und sind hochdehnbar. Die Bruchdehnung, gemessen nach DIN EN ISO 527 an 50µm dicken Folien aus dem Material der Deckschicht, beträgt in Querrichtung mindestens 500 %, vorzugsweise mindestens 700 %.

Geeignete Materialien sind z.B. LDPE, LLDPE, Ethylen-Propylen-Copolymere, Plastomere und Biopolymercompounds. Bei den LLDPE kann es sich vorzugsweise um m-LLDPE handeln, welches an Metallocen- bzw. singlesite-Katalysatoren hergestellt wird. Alle diese Materialien sind kommerziell erhältlich. Besonders bevorzugt sind Abmischungen aus LDPE und mLLDPE, besonders bevorzugt mit mindestens 50% mLLDPE.

Auch in den Deckschichten können neben den als Material genannten Polymeren übliche Additive und bis zu 30 % weitere Polymere enthalten sein. Vorzugsweise sind keine weiteren Polymere enthalten.

Die Deckschichten können aus dem gleichen oder aus verschiedenen Materialien aufgebaut sein. Vorzugsweise wird für beide Deckschichten das gleiche Material verwendet.

Es können auch 5-Schicht-Aufbauten eingesetzt werden, bei denen zwischen der Kern- und den Deckschichten geeignete Haftvermittlerschichten vorhanden sind. Als Haftvermittler von Kernschichten aus z.B. Styrolblockcopolymeren oder cyclischen Polyolefinen zu Deckschichten aus LDPE eignen sich z.B. mLLDPE, EVA, LLDPE und VLDPE. Auch vierschichtige Aufbauten, bei denen eine Haftschicht zwischen der Kenschicht und einer Deckschciht, nicht aber zwischen der Kernschicht und der anderen Deckschicht vorhanden ist, sind, insbesondere bei Deckschichten aus verschiedenen Materialien, möglich.

Es liegt im Rahmen der Erfindung, die Kernschicht, eine oder beide Deckschichten und ggfs. weitere Schichten aus mehreren Lagen, z.B. zwei, drei oder noch mehr Lagen, auszubilden.

Auch unsymmetrische Aufbauten, bei denen auf einer oder beiden Deckschicht(en) eine oder mehrere zusätzliche Schichten vorhanden sind, sind denkbar.

Die Folie kann in an sich bekannter Weise bedruckt werden. Eine Corona-Behandlung ist möglich, beispielsweise um die Bedruckung zu erleichtern.

Die erfindungsgemäßen Folien sind transparent, reißfest bei 120 - 190 °C schrumpfbar und ergeben somit belastbare und optisch sehr ansprechende Verpackungen. Insbesondere beträgt der Glanz mehr als 100% (gemessen nach ASTM D2457), die Trübung weniger als 10% (gemessen nach ASTM D1003). Der Schrumpf bei 130 °C beträgt in Querrichtung (CD) vorzugsweise mindestens 10 %, insbesondere mindestens 20 % und besonders bevorzugt mindestens 50 %. In Maschinenrichtung (MD) beträgt der Schrumpf mindestens 50%, vorzugsweise 60 bis 80%. Schrumpfwerte werden bestimmt, indem die zu untersuchende Folie in einem Ölbad für 20 s auf 130 °C erhitzt wird.

Ein weiterer Vorteil der erfindungsgemäßen Folie sind die ausgewogenen mechanischen Eigenschaften. Die Steifigkeit der Gesamtfolie liegt im Bereich von 300 bis 600 N/mm² (2% secant modulus), vorzugsweise von 300 bis 500 N/mm². Die Weiterreißfestigkeit ist sowohl in Maschinen- als auch in Querrichtung vergleichbar und beträgt von 40 bis 220 g, insbesondere von 80 bis 170 g. Typische Bruchfestigkeiten betragen von 15 bis 45 MPa vorzugsweise von 25 bis 35 MPa.

Besonders bevorzugt sind Folien mit einer Kernschicht aus SBS und Deckschichten aus LDPE, welche vorzugsweise durch Haftvermittlerschichten aus m-LLDPE an die Kernschicht gebunden sind.

Besonders bevorzugt sind auch dreischichtige Folien mit einer Kernschicht aus SBS und Deckschichten aus Gemischen von LDPE mit mindestens 50 Gew.-% mLLDPE.

Weitere besonders bevorzugte Folien haben eine Kernschicht aus PLA, welches mit einem Schlagzähmodifer ausgerüstet ist oder im Blend mit höchstens 50% eines abbaubaren Biopoylesters, wie Ecoflex® (Copolyester von BASF SE, Deutschland), vorliegt, mit Deckschichten aus PLA und mindestens 50% Ecoflex®, oder aus PLA und Stärke oder aus Stärke und Ecoflex®.

Die Herstellung der erfindungsgemäßen Folie kann auf an sich bekannte Weise erfolgen. Typischerweise und bevorzugt sind die Folien coextrudiert. Vorteilhaft ist eine Herstellung im Blasfolienverfahren, insbesondere mit einem Aufblasverhältnis von mindestens 1:2,5. Eine weitere Verstreckung zur Erreichung der gewünschten Schrumpfeigenschaften ist dann nicht mehr nötig. Bevorzugt beträgt das Aufbauverhältnis von 1 : 2,0 bis 1 : 3,5, besonders bevorzugt von 1 : 2,5 bis 1 : 3,0.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung. Dickenangaben beziehen sich auf die Gesamtdicke der Folie, sofern nichts anderes angegeben ist.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In den Beispielen wurden die folgenden Polymere verwendet:
LDPE: MFR = 0,3 g/10min (190°C, 2,16 kg), Dichte = 0,927 kg/dm³
mLLDPE: MFR = 1,0 g/10min (190°C, 2,16kg), Dichte 0,92 kg/dm³
SBS: Styrol-Butadien-Copolymer
HDPE: MFR = 0,7g/10min (190°C, 2,16kg); Dichte 0,957 kg/dm³
PP/LDPE = Blend von 80% heterophasischem PP-Copolymer mit LDPE
LDPE/HDPE = Blend 60/40%
Die Schmelzflussraten (MFR) sind Herstellerangaben.

### An den Folien wurden folgende Eigenschaften bestimmt:

Die Bruchfestigkeit in Maschinen- und in Querrichtung gemäß DIN EN ISO 527 Die Steifigkeit in Maschinen- und in Querrichtung gemäß DIN EN ISO 527 Die Weiterreißfestigkeit in Maschinen- und in Querrichtung gemäß Elmendorf ASTM D-1922. Das Schrumpfvermögen wurde einerseits durch einen Schrumpftest mit 6 Flaschen à 1,5 Liter aus PET bestimmt. Dazu wurden die Flaschen in die Folie eingeschlagen und dann ca. 10 sek. bei 140 °C wärmebehandelt. Das Ergebnis wurde visuell beurteilt, bei eng anliegender Folie mit gut, bei nicht anliegender Folie mit schlecht. Eine schlechte Beurteilung wurde auch dann vergeben, wenn die Gebinde beim Transport an den aufgeklebten Tragegriffen aufreissen. Zum anderen wurden 15 x 100 mm Stücke der Folie in einem Ölbad für 20 sek. auf 130 °C erwärmt und der Schrumpf als Quotient der Länge in MD bzw. CD nach dem Erhitzen zu der jeweiligen Länge vor dem Erhitzen berechnet.

### Beispiel 1 und 2

Eine Blasfolie wurde in einer Gesamtdicke von 30 µm mit einem Aufblasverhältnis von 1:3 extrudiert. Die Zusammensetzung und Dicken der Schichten sind in Tabelle 1 angegeben. Ebenso die Ergebnisse der Messungen.

### Vergleichsbeispiele 3 bis 6

Zum Vergleich wurden Blasfolien mit anderen Zusammensetzungen bzw. Schichtdickenverhältnissen in einer Gesamtdicke von 30 µm extrudiert. Die Zusammensetzung und Dicken der Schichten sind in Tabelle 1 angegeben. Ebenso die Ergebnisse der Messungen.

### Vergleichsbeispiel 7 und 8

Zum Vergleich wurden marktübliche Folien vermessen. Die Folie von Vergleichsbeispiel 6 hatte eine Dicke von 50 µm. Die Zusammensetzung und Dicken der Schichten sind in Tabelle 1 angegeben. Ebenso die Ergebnisse der Messungen.

**Tabelle 1**

| **(Vgl.-)** **Bsp. Nr.** | **Kernschicht** | **Deckschichten** | **Haftschichten** | **Bruchfestigkeit MD/CD** **[MPa]** | **Steifigkeit MD/CD** **[MPa]** | **Weiterreißfestigkeit MD/CD [g]** | **Schrumpf in MD/CD [%]** | **Schrumpftest** |
|---|---|---|---|---|---|---|---|---|
| 1 | 5 µm SBS | 12,5 µm mLLDPE | - | 31/32 | 474/426 | 229/147 | 78/19 | gut |
| 2 | 5 µm SBS | 9,5 µm LDPE | 3 µm mLLDPE | 31/27 | 354/363 | 141/91 | 72/28 | gut |
| 3 | 10 µm SBS | 7 µm LDPE | 3 µm mLLDPE | 32/26 | 501 /466 | 40/51 | 62/34 | schlecht |
| 4 | 15 µm SBS | 7,5 µm LDPE | - | 35/26 | 621/509 | 29/43 | 60/40 | schlecht |
| 5 | 20 µm PP/LDPE | 5 µm LDPE | - | 22/16 | 607/625 | 1 /44 | 5/2 | kein Schrumpf |
| 6 | 20 µm HDPE | 5 µm LDPE | - | 47/26 | 700/860 | 10/>800 | 76/-3 | schlecht |
| 7 | 30 µm LDPE/HDPE | 10 µm LDPE | - | 26/23 | 251 /295 | 73/35 | 74/30 | gut |
| 8 | 20 µm LDPE/HDPE | 5 µm LDPE | - | 28/26 | 263/278 | 79/27 | 78/16 | schlecht |

Man erkennt, dass die marktüblichen Folien 7 und 8 mit einer dicken Kernschicht aus einem Blend aus HDPE und LDPE (wie in US 7,422,786 B2 beschrieben) in Dicken von 50 µm eingesetzt werden müssen. Solche Folien in 30 µm (Vergleichsbeispiel 8) sind nur für kleinere Gebinde geeignet. Bei den 1,5 Liter Flaschen reißen die aufgeklebten Haltegriffe ab, da die Folien zu hohe Dehnungen erlauben bzw. nicht steif genug sind.

Der Einsatz eines schrumpfbaren, steifen Kernschichtmaterials alleine ergibt zwar steife aber wenig zähe Folien, die Weiterreißfestigkeit ist bei einer 10 µm und insbesondere bei einer 15 µm SBS-Kernschicht unzureichend, wie Vergleichsbeispiele 3 und 4 zeigen. Erst der erfindungsgemäße Aufbau mit einer dünnen Kernschicht aus einem steifen und schrumpfbaren Material liefert das gewünschte Resultat.

Steife aber nicht schrumpfbare Kernschichten aus HDPE (Vergleichsbeispiel 6) oder PP (Vergleichsbeispiel 5) sind ebenfalls nicht brauchbar. HDPE zeigt eine zu geringe Reißfestigkeit in MD = Spleißneigung und einen zu geringen Querschrumpf, es weist einen höheren Schmelzpunkt und damit - insbesondere in Querrichtung - einen schlechteren Schrumpfwert auf, als die erfindungsgemäß vorgeschlagenen Materialien. PP schrumpft fast nicht bei den üblichen Temperaturen.

## Patentansprüche

1. Schrumpffolie mit einem Schrumpf bei 130°C, 20 s in Längsrichtung von mindestens 50% und in Querrichtung von mindestens 10 % aus mindestens drei Schichten für die Verpackung von Mehrfachgebinden, **dadurch gekennzeichnet, dass** sie eine dünne Kernschicht umfasst, welche nicht mehr als 30 % der Gesamtdicke ausmacht und zu wenigstens 50 Gew.-% aus einem schrumpfbaren Material besteht, welches einen E-Modul von mindestens 800 MPa aufweist, und Deckschichten aus einem Material umfasst, welches eine Bruchdehnung in Querrichtung von mindestens 500 % aufweist.

2. Schrumpffolie nach Anspruch 1, **dadurch gekennzeichnet, dass** zwischen der Kernschicht und zumindest einer, vorzugsweise beiden Deckschichten jeweils eine Haftvermittlerschicht vorhanden ist.

3. Schrumpffolie nach Anspruch 1 oder 2, **dadurch gekennzeichnet, dass** als schrumpfbares und steifes Kernschichtmaterial ein Styrolblockcopolymer, ein Polyester, ein cyclisches Polyolefincopolymer, ein Propylen-Ethylen-Copolymer oder ein Biopolymer verwendet wird.

4. Schrumpffolie Anspruch 1, 2 oder 3, **dadurch gekennzeichnet, dass** als Deckschichtmaterial ein LDPE, LLDPE, mLLDPE, Propylen-Ethylen-Copolymer, Plastomer oder ein Gemisch aus einem Biopolymer und einem biologisch abbaubaren Alkyl-Aryl-Copolyester verwendet wird.

5. Schrumpffolie nach mindestens einem der vorherigen Ansprüche, **dadurch gekennzeichnet, dass** die Kernschicht 20 % der Gesamtdicke der Folie ausmacht.

6. Schrumpffolie nach mindestens einem der vorherigen Ansprüche, **dadurch gekennzeichnet, dass** die Folie im Blasextrusionsverfahren, vorzugsweise mit einem Aufblasverhältnis von mindestens 1 : 2,5 hergestellt ist.

7. Schrumpffolie nach mindestens einem der vorherigen Ansprüche, **dadurch gekennzeichnet, dass** als Kernschichtmaterial ein SBS-Polymer mit einem Schmelzpunkt unter 100°C, bevorzugt unter 80°C verwendet wird.

8. Schrumpffolie nach mindestens einem der vorherigen Ansprüche, **dadurch gekennzeichnet, dass** als Kernschichtmaterial ein SBS-Polymer mit einer Steifigkeit von mindestens 800 MPa, bevorzugt mindestens 1000 MPa verwendet wird.

9. Schrumpffolie nach mindestens einem der vorherigen Ansprüche, **dadurch gekennzeichnet, dass** die Deckschichten in Querrichtungh eine Bruchdehnung von mindestens 700 % aufweisen.

10. Schrumpffolie nach mindestens einem der vorherigen Ansprüche, **dadurch gekennzeichnet, dass** als Deckschichtmaterial mLLDPE und LLDPE oder ein Gemisch aus diesen Polymeren mit LDPE, besonders bevorzugt mit LLDPE oder mLLDPE als Hauptkomponente verwendet wird.

11. Schrumpffolie nach mindestens einem der vorherigen Ansprüche, **dadurch gekennzeichnet, dass** als Material der Haftschichten mLLDPE, VLDPE oder EVA verwendet wird, wobei die Haftschichten vorzugsweise nicht mehr als 20 % der Gesamtdicke ausmachen.

12. Folie nach mindestens einem der vorherigen Ansprüche, wobei die Deckschichten jeweils eine Dicke von 35 bis 90 % bei dreischichtigen Folien und von 40 bis 80 % bei vier oder fünfschichtigen Folien aufweisen.

13. Folie nach mindestens einem der vorherigen Ansprüche, wobei der Querschrumpf von 15% bei 130°C, 20s beträgt.

14. Folie nach mindestens einem der vorherigen Ansprüche, wobei das Kernschichtmaterial einen Erweichungspunkt unterhalb des Deckschichtmaterials aufweist.

15. Verwendung einer Schrumpffolie nach mindestens einem der vorherigen Ansprüche zum Verpacken von Mehrfachgebinden z.B. aus Glasflaschen, Kunststoffflaschen, Getränkedosen oder Konservendosen durch Einschrumpfen.
